# EUROPEAN PATENT SPECIFICATION

(11) **EP 1 292 387 B1**
(45) Date of publication and mention of the grant of the patent: **15.09.2004**
(21) Application number: 01944808.3
(22) Date of filing: 11.06.2001
(51) Int. Cl.: B01J 13/16, A01N 25/28

(54) **ENCAPSULATION PROCESS USING ANHYDRIDE MOIETIES**
EINKAPSELN MITTELS ANHYDRIDANTEILE
PROCEDE D'ENCAPSULATION AU MOYEN DE FRACTIONS ANHYDRIDES

(30) Priority: 12.06.2000 CA 2311194
(43) Date of publication of application: 19.03.2003
(73) Proprietor: McMASTER UNIVERSITY, Hamilton Ontario L8N 3Z5 (CA)
(72) Inventor: STÖVER, Harald D. H., Dundas, Ontario L9H 2C1 (CA); SHULKIN, Anna, Ancaster, Ontario L9K 1M3 (CA)
(74) Representative: Kremer, Simon Mark
(86) International application number: PCT/CA2001/000847
(87) International publication number: WO 2001/096012

(56) References cited:
- EP-A- 0 551 796
- US-A- 5 310 721

## Description

The present invention relates to microcapsules and to particles of a matrix, to methods of making them, and to their use.

### Background of the Invention

Microcapsules and matrices containing an encapsulated active ingredient are known for many purposes. In some instances, slow release of the encapsulated ingredient is required. Materials that have been encapsulated in microcapsules and hydrogel matrices include pharmaceuticals, pesticides, fungicides, herbicides, bactericides, dyes, inks, chemical reagents and flavouring materials, and semiochemicals, that is materials that will modify the behaviour of animal species, for example pheromones.

In the area of crop protection, insect pheromones are proving to be a biorational alternative to conventional hard pesticides. In particular, attractant pheromones can be used effectively in controlling insect populations by disrupting the mating process. Here, small amounts of species-specific pheromone are dispersed over the area of interest during the mating season, raising the background level of pheromone to the point where the male insect cannot identify and follow the plume of attractant pheromone released by his female mate.

Mechanical dispensers, hollow fibres, impregnated plastic twist-ties, and polymer microcapsules are some of the delivery devices used to deliver the pheromone throughout the mating period of the insect, typically two to six weeks.

Polymer microcapsules, in particular, promise to serve as efficient delivery vehicles, as they: a) are easily prepared by a number of interfacial and precipitation polymerizations, b) enhance the resistance of the pheromone to oxidation and irradiation during storage and release, c) may in principle be tailored to control the rate of release of the pheromone fill, and (d) permit easy application of pheromones by, for example, spraying, using conventional spraying equipment.

One known method of forming pheromone-filled microcapsules involves dissolving pheromone and a diisocyanate in xylene and dispersing this solution into an aqueous solution followed by addition of a diamine. A polyurea membrane forms rapidly at the interface between the continuous aqueous phase and the dispersed xylene droplets, resulting in formation of microcapsules containing the pheromone and xylene,; see for, example PCT international application WO 98/45036, Li, Nielsen, Sengupta, published 15 October 1998. Although this method is useful and yields valuable products it does have some limitations. Isocyanates are highly reactive compounds and it is at times difficult to encapsulate compounds that react with the isocyanate. For example, it is difficult to encapsulate compounds containing hydroxyl groups such as alcohols. Furthermore, isocyanates are relatively expensive compounds and should be handled with care.

The present invention provides an encapsulation method that does not require use of an isocyanate reactant.

### Summary of the Invention

In one aspect, the invention provides a method of forming microcapsules or particles of a matrix which comprises dispersing a first liquid in a second, immiscible or partially miscible liquid that forms a continuous phase, one liquid containing a reactant that comprises anhydride moieties and the other liquid containing a reactant that will react with the anhydride moieties to form a membrane.

If a material is to be encapsulated in the microcapsules or the particles of the matrix, that material is dissolved or dispersed in the first liquid that forms the dispersed phase. The invention is particularly useful for encapsulating materials for which controlled release is needed, for instance, insect pheromones.

In another aspect, the invention relates to microcapsules or particles of a matrix formed by reaction, at an interface, between a reactant containing anhydride moieties, and a reactant that will react with anhydride moieties to form a membrane.

### Description of Preferred Embodiments

In some preferred embodiments, the reactant that contains reactive anhydride moieties is an oligomer or a copolymer, and the other reactant is a polyamine or a polyol. Sources of anhydride moieties include anhydride-containing compounds that also contain double bonds that can undergo polymerisation, for example maleic anhydride, itaconic anhydride, citraconic(methylmaleic)anhydride, ethylmaleic anhydride, 1,2-cyclohexene-1,2-dicarboxylic acid anhydride and 1,2-cyclohexene-4,5-dicarboxylic acid anhydride, of which maleic anhydride is preferred.

Maleic anhydride undergoes homopolymerisation only with difficulty and it is possible only to form low molecular weight oligomers. Maleic anhydride dimer and maleic anhydride oligomer can be used as a reactant. Maleic anhydride does readily undergo copolymerisation with other monomers, for example styrene, provided that the molar ratio of styrene to maleic anhydride is 1:1 or greater. This permits at least one styrene moiety to be located between any two maleic anhydride moieties, and eliminates the difficulty that occurs when attempts are made to homopolymerize maleic anhydride. A preferred reactant is a maleic anhydride-containing copolymer.

Styrene-maleic anhydride copolymers (SMA) are commercially available with maleic anhydride contents up to 50 mol%. Any styrene-maleic anhydride copolymer can be used. A styrene-maleic anhydride copolymer containing 50 mol% maleic anhydride (SMA50) has more reactive moieties than one containing, say, only 32 mol% or 14 mol% maleic anhydride (SMA32 or SMA14), so it will tend to form a membrane more quickly and the membrane will be more polar. The membrane formed with SMA50 will be hydrophilic and will trap.some water in its shell. Membranes formed from copolymers with 32 mol% and 14 mol% maleic anhydride are less hydrophilic and more amphiphilic. The release properties of the capsule will depend i.a. upon the thickness, density, and polarity of the membrane. By varying the amount of maleic anhydride in the copolymer it is possible to match the release properties of the membrane to the particular material to be released.

The solubility properties of the styrene-maleic anhydride copolymer will depend on the maleic anhydride contents of the copolymer. The solubility parameter of copolymer containing 50 mol% maleic anhydride is 10.1 (cal/cm³)^{1/2}, so the copolymer is soluble only in solvents with some degree of polarity, for instance ethyl acetate, methyl ethyl ketone, tetrahydrofuran, dichloromethane and butyronitrile. Copolymer with 5 mol% maleic anhydride has a solubility parameter of 9.314 (cal/cm³)^{1/2} and is soluble in these solvents, but also soluble in non-polar solvents such as toluene and xylene which, because of their immiscibility in water, are particularly suitable for use as the dispersed liquid if the continuous phase is aqueous. Copolymer with 32 mol% maleic anhydride has a solubility parameter of 9.907 (cal/cm³)^{1/2}.

It is possible to use anhydride moieties in a copolymer that is prepared from an unsaturated co-polymerisable monomer other than styrene. As well, there may be used as comonomer α-methylstyrene, or styrene or α-methylstyrene that is substituted in the benzene ring of the styrene moiety. As substituent, mention is made of lower alkyl groups having up to 18 carbon atoms, preferably up to 6 carbon atoms. The extra alkyl substituents on, for example, p-methylstyrene and p-tert.-butylstyrene render the copolymer less polar and more soluble in the water-immiscible solvents such as xylene and toluene that are commonly preferred for use in interfacial reactions. Other possible unsaturated copolymerisable monomers that may be present, in place of or in addition to styrene, include olefins such as ethylene, conjugated dienes such as 1,3-butadiene and isoprene, alkyl acrylates and methacrylates, especially lower alkyl such as methyl, ethyl and, preferably, the butyl and ethylhexyl esters, vinyl acetate, acrylonitrile, methacrylonitrile, acrylamides, methacrylamides and unsaturated ethers such as alkyl vinyl ethers, for instance, the methyl and ethyl ethers. Also mentioned are the vinyl sulphoxides and vinyl sulphones. Mixtures of these can be used in the copolymerization to design copolymers that have particular solubility properties and, when reacted with polyamine or polyol, impart particular properties to the membrane formed.

The molecular weight of the copolymer may be greater than about 1,000, preferably greater than about 20,000. There is no critical upper limit on the molecular weight of the polymer, provided that the viscosity does not increase to such an extent that reaction is impeded. Molecular weights greater than about 400,000 are not normally used.

Suitable reactants complementary to anhydride moieties include water-soluble primary and secondary polyamines, preferably primary diamines. These include diamines of formula (I):

H₂N(CH₂)ₙNH₂ (I)

wherein n is an integer from 2 to 10, preferably 2 to 6. Mention is made of hexamethylenediamine. Also suitable are mixed primary/secondary amines and mixed primary/secondary/tertiary amines. Mixed primary/secondary amines include those of formula (II): 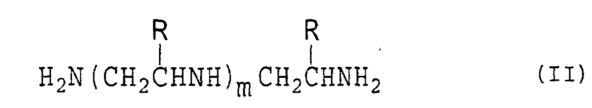 wherein m is an integer from 1 to 1,000, preferably 1 to 10 and R is hydrogen or a methyl or ethyl group. Mention is made of tetraethylenepentamine (TEPA). Suitable primary/secondary/tertiary amines include compounds like those of formula (II) but modified in that one or more of the hydrogen atoms attached to a non-terminal nitrogen atom of the compound of formula (II) is replaced by a lower aminoalkyl group such as an aminoethyl group. The commercial product of tetraethylenepentamine usually contains some isomers branched at non-terminal nitrogen atoms, so that the molecule contains one or more tertiary amino groups. All these polyamines are readily soluble in water, which is suitably used as the second, continuous phase. Other suitable polyamine reactants include polyvinylamine, polyethyleneimine, and polyallylamine. Primary and secondary amino groups will react with anhydride moieties. Tertiary amino groups will catalyse the reaction of the primary and secondary amino groups.

Also suitable are polyetheramines of general formula (III) : 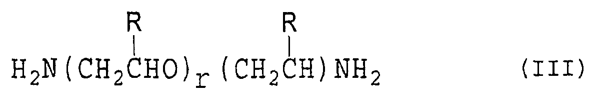 where r is an integer from 1 to 20, preferably 2 to 15, more preferably 2 to 10, and R is hydrogen, methyl or ethyl. Such compounds are available under the trademark Jeffamine from Huntsman.

If one of the reactants is an amine it must contain at least two amino groups capable of reacting with the anhydride, i.e., primary or secondary amino groups. Hence, the compound must be, at least, a diamine, but it may contain more than two amino groups; see for example compounds of formula (II). In this specification the term "diamine" is used to indicate a compound that has at least two reactive amino groups, but the term does not necessarily exclude reactants that contain more than two amino groups. Similar remarks apply to the term "diol".

Reactants complementary to anhydride moieties also include compounds that contain both amino and hydroxyl groups. As examples of such compounds there are mentioned monoethanolamine, diethanolamine, triethanolamine, dialkylethanolamines, N-alkyl-diethanolamines and N,N-dimethyl-2-amino(ethoxy)ethanol.

The reaction between maleic anhydride and diamine, results in the opening of the anhydride ring with the formation of one amide moiety and one ammonium salt moiety formed between a carboxyl group and an amine. Hence, the membrane formed is, in part, ionic. It is possible to subject this product to elevated temperature to dehydrate it to form a maleimide.

If a material is to be encapsulated in the microcapsules formed, that material is dissolved or dispersed in the first liquid, together with the reactant comprising anhydride moieties. As indicated above, this material must not be so reactive with the anhydride that it competes significantly with the reaction that creates the membrane. Alcohols can be encapsulated. Although alcohols will react with anhydride moieties to form acid esters, that reaction is slow, compared with the reaction between the anhydride moiety and the amine, so the anhydride-alcohol reaction does not compete significantly with the anhydride-amine reaction. As stated above, the rate of the membrane-forming reaction depends on the particular first liquid that is used as the dispersed organic phase. A catalyst can be incorporated with the amine in the aqueous phase to speed the anhydride-amine reaction. Suitable catalysts include tertiary amines.

The tertiary amine, in the amount used, should be freely soluble in the water present in the reaction mixture. The simplest tertiary amine is trimethylamine and this compound, and its C₂, C₃ and C₄ homologues can be used. It is of course possible to use tertiary amines containing a mixture of alkyl groups, for instance methyldiethylamine. The tertiary amine can contain more than one tertiary amine moiety. It may also contain other functional groups provided that those other functional groups do not interfere with the required reaction, or the functional groups participate beneficially in the required reaction. As an example of a functional group that does not interfere there is mentioned an ether group. As examples of groups that participate there are mentioned primary and secondary amine groups, and hydroxyl groups. Examples of suitable tertiary amines include compounds of the following structures:

N[CH₂(CH₂)ₙCH₃]₃ ,

where n is 0, 1, 2 or 3 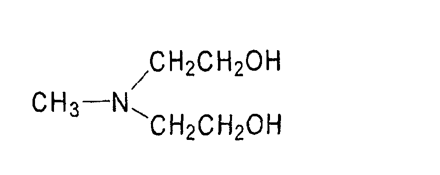 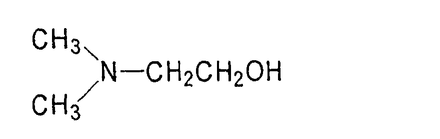 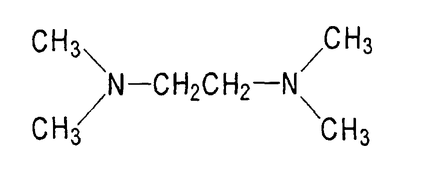 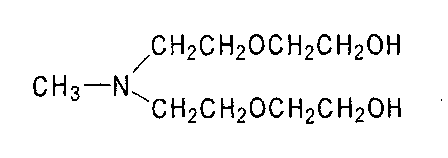 and 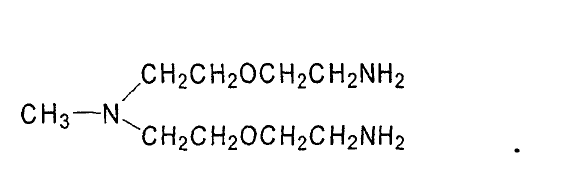 Of the tertiary amines, triethylamine (TEA) is preferred.

The amount of the tertiary amine required is not very great. It is conveniently added in the form of a solution containing 0.5g of TEA per 10mL of water. Usually 0.5% by weight of this solution, based on the total weight, suffices, although 0.7% by weight may be required in some cases. The amount used does not usually exceed 1%, although no disadvantage arises if more than 1% is used.

Catalysts other than tertiary amines can be used. Metal salts that are soluble in an organic solvent used as the first liquid can be used. Mention is made of titanium tetraalkoxides available under the trademark Tyzor from DuPont and stannous octanoate, although these should not be used when there is also present in the organic solvent an alcohol to be encapsulated.

The ability to encapsulate alcohols is of particular significance. The pheromone of the codling moth is E,E-8,10-C₁₂ alcohol and it has been difficult to encapsulate this pheromone by the previously known technique involving isocyanate. The present invention permits encapsulation of alcoholic compounds, including alcoholic pheromones and should permit encapsulation of codling moth pheromone.

In other embodiments of the invention it is possible to use a polyol, rather than a polyamine. Suitable polyols include diols of formula (IV):

HO(CH₂)ₙOH (IV)

wherein n is an integer from 2 to 10, preferably 2 to 4, and of formula (V): 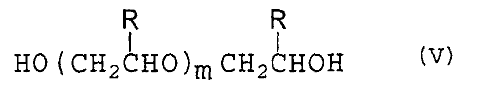 wherein m is an integer from 1 to 10 and R is hydrogen or a methyl or ethyl group. The reaction between, an anhydride and an alcohol is slower than the reaction between anhydride and an amine. A catalyst can be used and suitable catalysts include the tertiary amines and other catalysts mentioned above. It should be possible to encapsulate an alcohol by means of an anhydride and a diol. Reaction between anhydride moieties, and hydroxyl groups of the diol, in aqueous solution, should occur much more quickly than reaction between maleic anhydride and a hydroxyl group in organic solvent. This is particularly so if the aqueous solution contains a water-soluble catalyst for the reaction, for instance a tertiary amine that reacts with the anhydride moiety to release an ionised moiety, which is drawn to the aqueous/organic interface.

The first liquid, that serves as the dispersed phase, is a liquid in which the first reactant can be dispersed or dissolved and in which any material to be encapsulated can be dispersed or dissolved. It should be immiscible, or at least only partially miscible, with the second liquid. While the limits on what is meant by "partially miscible" are not precise, in general a substance is considered to be water-immiscible if its solubility in water is less than about 0.5% by weight. It is considered to be water-soluble if its solubility is greater than 98%, i.e., if 1 gram of the substance is put in 100 grams of water, 0.98 gram would dissolve. A substance whose solubility falls between these approximate limits is considered to be partially water-miscible. Desirably, the first liquid is a marginal solvent for the polymer reactant and has a boiling point in the vicinity of 100°C. The properties of the first liquid, which will become encapsulated with the active material that is to be released, will affect the rate of release of that active material. Selection of a first liquid has to be made with these considerations in mind. Suitable candidates for use as the first liquid include alkylbenzenes such as toluene and xylene, ethers such as methyl t-butyl ether, ketones such as methylisobutylketone, esters such as ethyl acetate, propyl acetate, halogenated aliphatic hydrocarbons such as dichloromethane, and aliphatic nitriles such as butyronitrile. Mixtures of solvents can be used. There can also be used co-solvents to change the properties of solvents or solvent mixtures. As co-solvents there are mentioned aliphatic liquids such as kerosene and also cyclic hydrocarbons such as cyclohexane. For instance, styrene-maleic anhydride copolymer containing 14% maleic anhydride is soluble in all of these solvents, whereas copolymer containing 50% maleic anhydride is soluble only in ethyl acetate, dichloromethane and butyronitrile.

The second liquid that forms the continuous phase is preferably water or an aqueous solution with water as the major component, or another polar solvent.

Surfactants and emulsifiers can be used to assist in dispersion of the first liquid, i.e. the oil phase, in the second liquid. Mention is made of poly(vinylalcohol), polyvinylpyrrolidones and nonylphenyl-oligo-ethylene glycol, available under the trademark IGEPAL. These are of formula: 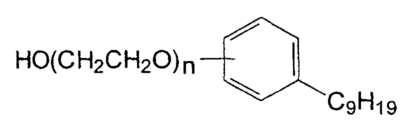 where n has an average value from about 9 to about 13. IGEPAL 630, indicating a molecular weight of about 630, is mentioned. IGEPAL 630 is preferred to poly(vinylalcohol) as it results in smaller microcapsules. Other suitable surfactants and emulsifiers include polyethyleneglycol alkyl ethers, for example C₁₈H₃₅(OCH₂CH₂)ₙOH, where n has an approximate value of about 20, available under the trade-mark BRIJ 98.

Ionic surfactants can be used. Sodium dodecyl sulphate (SDS) is mentioned as an example of an anionic surfactant.

The first liquid can be dispersed in the second liquid by dropping the first liquid into a stirred bath of the second liquid. The first liquid then forms droplets throughout the continuous phase of the second liquid. The second reactant may be present in the second liquid before the first liquid is added. In an alternative embodiment, the second reactant is not present in the second liquid when the first liquid has been dispersed, but is added subsequently. In any event, the first and second reactants meet at the interface between the continuous and dispersed phases, that is, the surface of the droplets, and react to form the membrane.

The membrane-forming reaction can be carried out at a temperature above 0°C, at room temperature or at elevated temperature. If elevated temperature is used, the optimum temperature will depend on the boiling point of each of the solvents that make up the dispersed and continuous phases and that of any material to be encapsulated. No advantage is presently seen in using a temperature greater than about 70°C.

The concentration of each reactant in the liquid will affect the properties of the product. At low concentrations, the formed membranes will be thinner than at higher concentrations. It is preferred that the concentration of the SMA copolymer is not less than about 2%, and good results have been achieved with concentrations of 5-6%. If, for instance, a copolymer of styrene-maleic anhydride is present at up to about 10% concentration in the first liquid there will probably be formed discrete microcapsules. At yet higher concentration, discrete microcapsules are not formed but rather matrix particles in which the first liquid is entrapped. If the concentration is greater than about 15%, there will probably be formed a matrix. It is a matter of routine experimentation not involving exercise of any inventive faculty to determine at which concentrations a particular system yields microcapsules and at which concentrations it yields a matrix. The maleic anhydride content of the SMA copolymer will affect the nature of the matrix. With SMA50 the membrane formed is hydrophilic and the matrix will be a hydrogel. With a copolymer of lower maleic anhydride content, say SMA14, the membrane formed is amphiphilic rather than hydrophilic.

When microcapsules are formed from a first liquid having a density less than that of water, they float on top of the liquid present. They can be shipped in this form, or scooped off. When particles of a matrix are formed, the liquid can be decanted from the porous solid matrix particles.

In another embodiment of the invention, and with some anhydride-containing reactants, the reactant that will react with anhydride moieties to form a membrane is a base that causes hydrolysis to open the anhydride ring. Hence the reactant can be a base, for example an alkali metal hydroxide such as sodium, potassium or lithium hydroxide, or an organic base, for example a tertiary amine such as those mentioned above as catalysts for the reaction between anhydride and diamine. The anhydride can be present in organic liquid that is dispersed in an aqueous phase to which, after dispersion of the organic liquid to form an emulsion, the base is added in aqueous solution. Hydrolysis of anhydride moieties occurs and hydrolized moieties that are not water soluble precipitate at the interface between the organic phase and the aqueous phase, producing microcapsules or matrix particles.

As indicated above only some anhydride-containing reactants are suitable for use in this embodiment of the invention. For instance copolymers of styrene and maleic anhydride with 50% maleic anhydride content are soluble in water when hydrolyzed and so cannot be used in this embodiment of the invention. More hydrophobic SMA copolymers, for example those with only 32% or less maleic anhydride content, are not water soluble and will precipitate to form microcapsules. SMA copolymers with 50% maleic anhydride can be used in this aspect of this invention if the styrene moieties bear substituents that reduce the water solubility of the copolymer, for example alkyl substituents, as discussed above. For example a copolymer of tert.-butylstyrene and maleic anhydride of 50% maleic anhydride content is not water soluble and can be used in this embodiment. It is a matter of routine experiment, not involving the exercise of any inventive faculty, to determine the water solubility of any particular anhydride-containing reactant and therefore whether it can be used in this embodiment of the invention.

Microcapsules prepared by hydrolysis can be additionally modified by deposition of a layer of, for example, a diamine or polyamine such as those of formula (II) discussed above, preferably a polyethyleneimine, on their surface. The initially formed microcapsules are polyanionic but become polycationic upon modification with PEI and exhibit colloidal stability at low pH.

As examples of materials to be encapsulated, particular mention is made of insect pheromones. In the notation used below to describe the structure of the pheromones, the type (E or Z) and position of the double bond or bonds are given first, the number of carbon atoms in the chain is given next and the nature of the end group is given last. To illustrate, the pheromone Z-10 C19 aldehyde has the structure;

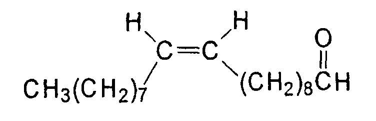

Pheromones may in fact be mixtures of compounds with one component of the mixture predominating, or at least being a significant component. Mentioned as examples of significant or predominant components of insect pheromones, with the target species in brackets, are the following: E/Z-11 C14 aldehyde (Eastern Spruce Budworm), Z-10 C19 aldehyde (Yellow Headed Spruce Sawfly), Z-11 C14 acetate (Oblique Banded Leafroller), Z-8 C12 acetate (Oriental Fruit moth) and E,E-8,10 C12 alcohol (Codling moth).

An example of a ketone that is a pheromone is E or Z 7-tetradecen-2-one, which is effective with the oriental beetle. An ether that is not a pheromone but is of value is 4-allylanisole, which can be used to render pine trees unattractive to the Southern pine beetle.

In one preferred embodiment, the product of the microencapsulation process is a plurality of microcapsules having a size in the range of from 1 µm to 5000 µm, preferably 20 µm to 2000 µm. Particularly preferred microcapsules have sizes in the range from 10 µm to 60 µm, more preferably 20 to 30 µm, and an encapsulated pheromone contained within the membrane. The microcapsules can be used in suspension in water to give a suspension suitable for aerial spraying. The suspension may contain a suspending agent, for instance a gum suspending agent such as guar gum, rhamsan gum or xanthan gum.

Incorporation of a light stabilizer, if needed to protect encapsulated material, is within the scope of the invention. Suitable light stabilizers include the tertiary phenylene diamine compounds disclosed in Canadian Patent No. 1,179,682, the disclosure of which is incorporated by reference. The light stabilizer can be incorporated by dissolving it, with the pheromone, in the oil phase. Antioxidants and UV absorbers can also be incorporated. Many hindered phenols are known for this purpose. Mention is made of antioxidants available from Ciba-Geigy under the trade-marks Irganox 1010 and 1076. As UV absorbers there are mentioned Tinuvin 292, 400, 123 and 323 available from Ciba-Geigy.

To assist in determining the distribution of sprayed microcapsules it is possible to include a coloured dye or pigment in the microcapsules. The dye should be oil-soluble and can be incorporated, with the pheromone, in the oil phase. It will be used only in a small amount and will not significantly affect the membrane-forming reaction. Alternatively, or additionally, an oil-soluble or oil-dispersible dye can be included in the aqueous suspension of microcapsules, where it is absorbed by the microcapsule shell. Suitable oil-soluble or oil-dispersible dyes can be obtained from DayGlo Color Corporation, Cleveland, Ohio, and include Blaze Orange, Saturn Yellow, Aurora Pink, and the like.

Although the invention has been described largely with reference to encapsulation of pheromones, other molecules that are active in nature can be encapsulated in a similar manner. As examples there are mentioned linalool, terpineol, fenchone, and keto-decenoic acids and hydroxy-decenoic acids, which encourage activity of worker bees. Encapsulated 4-allylanisole can be used to make pine trees unattractive to the Southern pine beetle. Encapsulated 7,8-epoxy-2-methyloctadecane can be used to combat the nun moth or the gypsy moth. All these applications, and microcapsules containing these materials, are within the scope of the present invention.

Other compounds of interest for encapsulation include mercaptans. Some animals mark territory by means of urine, to discourage other animals from entering that territory. Examples of such animals include preying animals such as wolves, lions, dogs, etc. Ingredients in the urine of such animals include mercaptans. By dispersing microcapsules containing the appropriate mercaptans it is possible to define a territory and discourage particular animals from entering that territory. For example, the urine of a wolf includes a mercaptan, and distribution of microcapsules from which this mercaptan is gradually released to define a territory will discourage deer from entering that territory. Other materials that can be encapsulated and used to discourage approach of animals include essences of garlic, putrescent eggs and capsaicin.

Other compounds that can be included in the microcapsules of the invention include perfumes, pharmaceuticals, fragrances, flavouring agents and the like.

It is also possible to encapsulate materials for uses other than in nature. Mention is made of dyes, inks, adhesives and reactive materials that must be contained until they are to be used, for instance, by controlled release from a microcapsule or by rupture of a microcapsule.

Other materials that can be encapsulated are mentioned in PCT international application WO 98/45036 mentioned above.

It is found that the microcapsules of this invention are pH sensitive. The microcapsules shrink in acid and swell in base. Release of encapsulated material is slowed when the microcapsules are shrunken and is accelerated when the microcapsules are swollen. As styrene-maleic anhydride copolymers are biocompatible, microcapsules of the invention can be used to supply pH-sensitive pharmaceutical materials to the intestine. In the acidic stomach environment the microcapsules are shrunken and little or no release of active ingredient occurs. On entering the intestine, with its alkaline environment, the microcapsules swell and release of encapsulated active ingredient occurs.

The invention is further illustrated with reference to the accompanying drawings and the following non-limiting examples.

In some of the examples, dodecyl acetate was used as the material to be encapsulated and released. Dodecyl acetate is itself a component of the pheromone of many species, including the pod borer. Its properties also make it valuable as a mimic for other pheromones that contain ester moieties and are free of other active groups such as hydroxyl and aldehyde groups.
Figure 1 shows schematically an apparatus used in the examples;
Figure 2 is an optical photomicrograph of capsules produced by Example 1;
Figures 3A and 3B are optical photomicrographs of microcapsules produced by Example 6;
Figures 4A to 4D are optical photomicrographs of microcapsules produced by Example 7;
Figures 5A and 5B are optical photomicrographs of microcapsules of Example 8;
Figures 6A, 6B and 7 are optical photomicrographs of microcapsules produced in Example 9;
Figures 8A and 8B are optical photomicrographs of Example 11.
Figures 9 and 13 are optical microscope images of products of Example 12 and Figures 10A, 10B and 10C, Figures 11A, 11B and 11C and Figure 12 are TEM images; and
Figure 14 is a graphical illustration of release data of microcapsules in accordance with the invention.

Figures 15 and 16 are optical microscope images of products of Examples 19 and 20.

### Example 1:

### Capsules from Poly(styrene-maleic anhydride), 50% maleic anhydride content (SMA50)

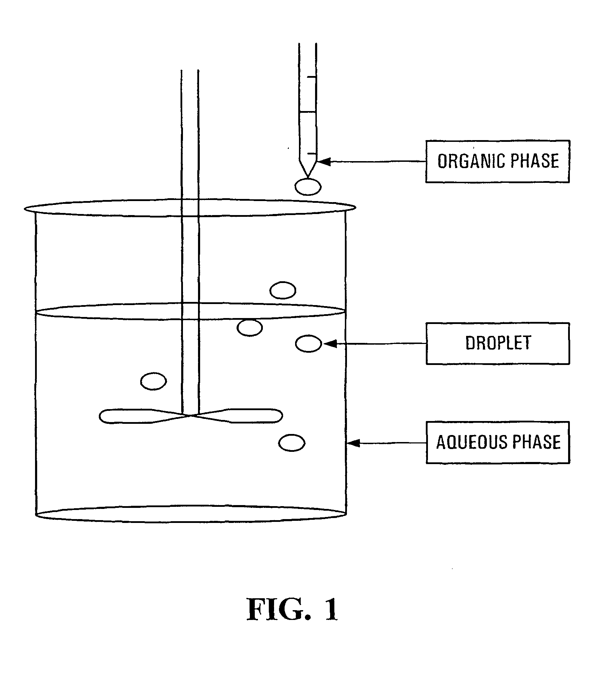

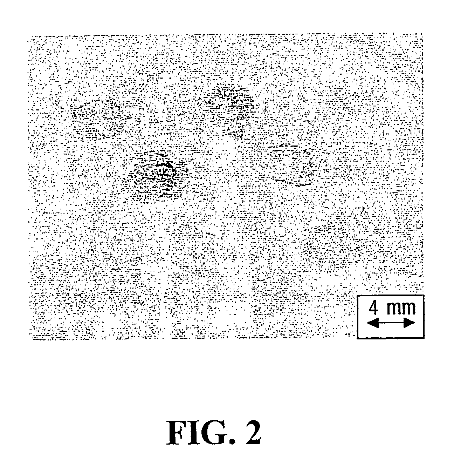

Using the apparatus shown in Figure 1, a solution of 5g poly(vinylalcohol) (PVA, 87% hydrolyzed, MW 10,000) and 2g hexamethylenediamine (HMDA, 0.017 mol) in 500 mL distilled water was stirred at 650 rpm for 10 minutes. Then an oil phase, containing 1g of SMA50 copolymer of about 50,000 Daltons molecular weight dissolved in 10 ml ethyl acetate, was added dropwise to this solution. Immediate capsule formation was observed and the size of the capsules exactly mirrored that of the parent droplet (Fig. 2),

### Example 2 (Comparative):

In a comparative experiment, the above procedure was repeated, except that HMDA was omitted. Polymer precipitated, but no capsule formation occurred.

### Example 3:

In a further experiment, the procedure of Example 1 was repeated except that the aqueous phase was saturated with ethyl acetate prior to the addition of the organic phase. The oil phase was dispersed into the aqueous phase, with no precipitation of polymer. After several minutes stirring the diamine was added dropwise, and capsules formed. The capsules formed were soft. A similar experiment using butyronitrile instead of ethyl acetate gave the same results, soft capsules. The capsules produced were smaller in size compared to ones prepared from Example 1, where the aqueous phase was not saturated with ethyl acetate or butyronitrile. Their size was about 500 micrometers in diameter.

Release measurements from the capsules produced in Example 1 were done using gravimetric analysis and the release rate was calculated to be about 0.02 g/cm²·h, where cm² refers to the surface area of the capsules used.

### Example 4:

### Encapsulation of a dodecyl acetate/ethyl acetate mixture:

0.5 g of copolymer(SMA50, 50,000 mol. wt.) were dissolved in 10 mL of ethyl acetate and 4 mL of dodecyl acetate were added afterwards. At the same time 0.15 g of IGEPAL 630 (nonylphenyl-oligo-ethylene glycol)(0.3% by weight) were dissolved in 30 mL of water. The aqueous phase was stirred at 700 rpm, and the oil phase was added dropwise over 1 min. to form an oil-in-water emulsion. After 5 min., the stirring speed was reduced to 450 rpm and tetraethylenepentamine (TEPA) (0.1 g) dissolved in 15 mL of distilled water was added dropwise over 3 min. During addition of TEPA immediate capsule formation was observed. Capsules were 30-70 micron in diameter.

### Example 5:

This example illustrates the conversion to polymer membrane.

0.5 g of copolymer (SMA50) was dissolved in 10 mL of ethyl acetate and 4 mL of dodecyl acetate were added afterwards. This solution was added to the beaker, which contained 30 mL water, without stirring. After 5 min., TEPA (0.1 g) dissolved in 15 mL of water, was carefully injected to the aqueous phase. Immediate membrane formation was observed at the interface. The beaker was covered, and left to stand overnight without any stirring. After 12 hours, the top, organic phase was removed from the beaker, and precipitated in heptane. The precipitated polymer, which was residual styrene-maleic anhydride copolymer, was dried at 60°C at vacuum for 24 h. The conversion of the polymer to the membrane at the interface was 60%.

### Example 6:

This example illustrates the effect of the ratio of oil phase to water phase, and it also illustrates the effect of stirring speed on capsule size.

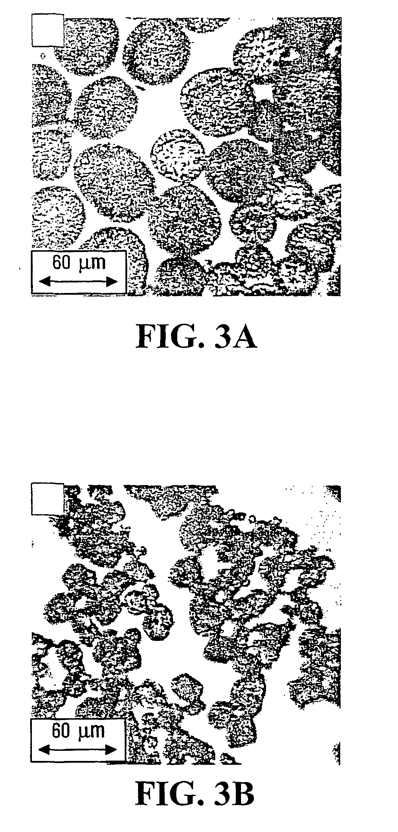

When 14 mL of the oil phase (10 mL ethyl acetate and 4 mL dodecyl acetate containing 3.6% SMA50 (50,000 mol. wt.) were dispersed in 150 mL of aqueous phase in the presence of 1.3% IGEPAL 630, and excess of TEPA was added afterwards (using the procedure of Example 5) big, 2 mm capsules were produced. On the other hand, when 14 mL of the core-oil were dispersed in 30 mL water containing 1.3% IGEPAL 630, and an excess of TEPA was added afterwards and all other conditions were the same, small 30-70 micron capsules were made, depending upon stirring speed. Figures 3A and 3B are optical photomicrographs of dry microcapsules, prepared using the latter oil-to-water ratio stirring speeds (A) 500 rpm and (B) 700 rpm.

### Example 7:

This example illustrates typical procedure for encapsulation of non-polar solvents using styrene-maleic anhydride copolymers.

A solution of the copolymer (SMA14) (purchased from Aldrich, random distribution of maleic anhydride groups, 224,000 mol. wt.), dissolved in toluene or xylene (3-10% by weight), was added dropwise to the aqueous phase and stirred at 400-600 r.p.m. in the presence of a stabilizer (PVA, as above, 1% by weight). After 15 min., the stirring speed was reduced and tetraethylenepentamine (TEPA) dissolved in 15 ml of distilled water was added dropwise. TEPA was used at 10-15 fold molar excess based on the quantity of maleic anhydride groups.

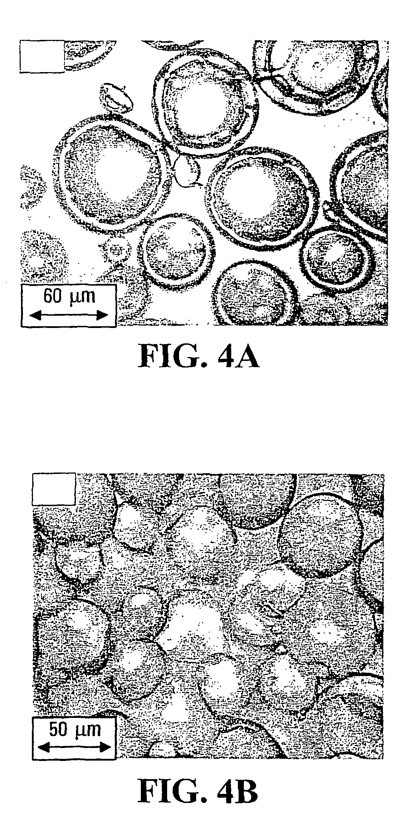

TEPA was selected for this procedure. The reaction can be carried out at room temperature or elevated temperature. Microcapsules produced by this method were from 30 to 60 µm in diameter. Optical photomicrographs of the wet and dry capsules prepared at room temperature from SMA14 are shown in Fig. 4A-D.

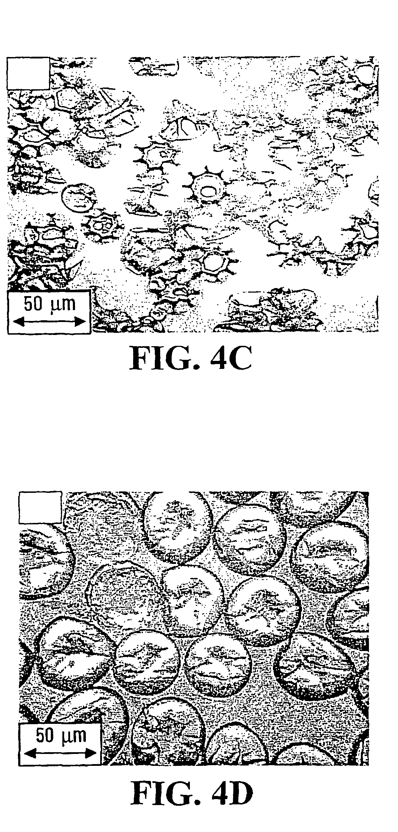

Figures 4A and 4B show capsules in aqueous dispersion containing toluene and xylene, respectively, as core oil. Figs. 4C and 4D show the same capsules after drying for 15 minutes on a glass slide. After about 15 min. on the slide, the capsules had significantly released as indicated by the hollow structure in Fig. 4C for toluene, and the indentation in Fig. 4D for xylene.

### Example 8:

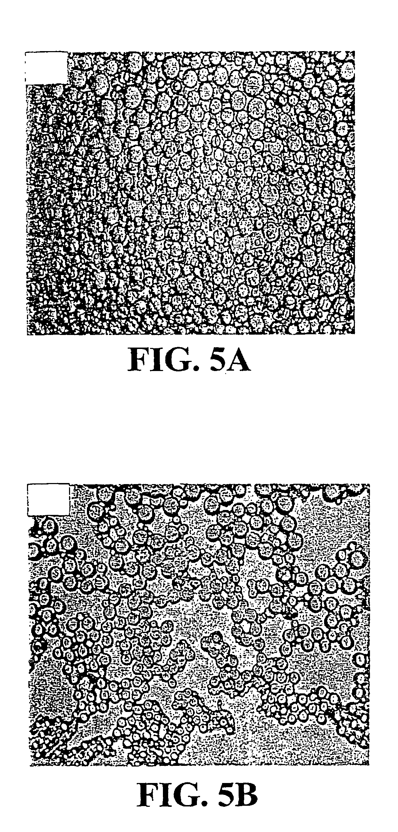

Using the general procedures described in the previous examples, with SMA14, sodium dodecyl sulfonate as emulsifier and stirring at 450 rpm, capsules with relatively strong shells were prepared using
1. methylisobutylketone,
2. toluene/dodecyl acetate (1:1),
3. methyl isobutyl ketone/dodecyl acetate (2:1).
4. toluene/octyl acetate
5. methyl isobutyl ketone/octyl acetate
as the first liquid, which becomes the core oil. Methyl isobutyl ketone is a poorer solvent than toluene or xylenes, and dodecyl acetate is a non-solvent for the styrene-maleic anhydride copolymer. Figures 5A and 5B show optical photomicrographs of the wet and dry capsules prepared from methyl isobutyl ketone/dodecyl acetate (2:1) as the core oil, using SDS as surfactant and stirring at 450 rpm.

The fact that microcapsules, containing methyl isobutyl ketone/dodecyl acetate as a core oil, release at very slow rate is demonstrated in Fig. 5B. The microcapsules were still full after having been dispersed on a glass slide and dried for one week.

Microcapsules made from SMA14 with octyl acetate instead of dodecyl acetate in a mixture with toluene and methyl isobutyl-ketone as first liquid collapsed relatively fast.

### Example 9:

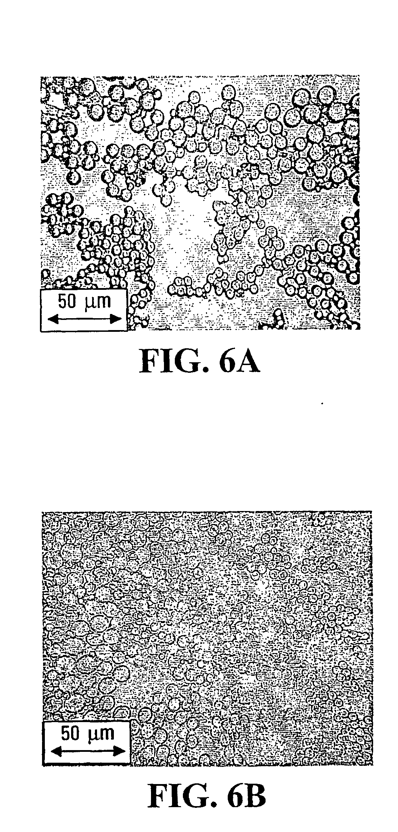

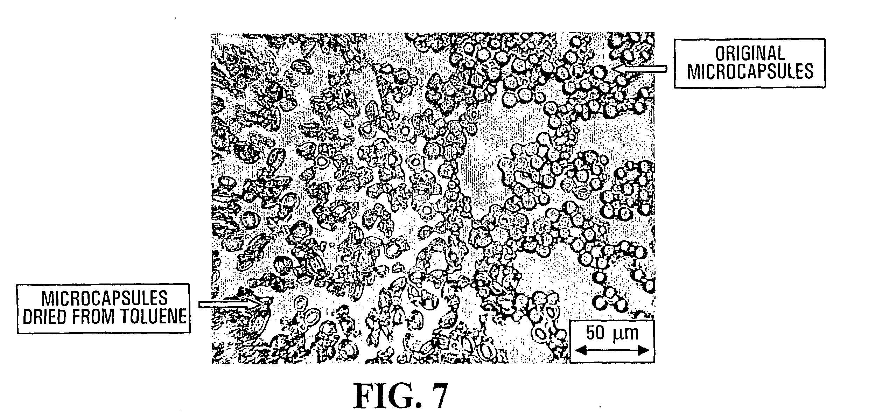

A droplet of toluene was added to the dry dispersion of microcapsules prepared from the methylisobutylketone/dodecyl acetate mixture in Example 8. The microcapsules swelled and significantly increased in diameter, but did not dissolve, which indicates that the shell material was cross-linked (Fig. 6A and B). After the toluene dried, these capsules collapsed. Optical photomicrographs of these capsules dried from toluene are shown in Fig. 7. The top right corner of the picture shows the original stable microcapsules from the methyl isobutyl ketone/dodecyl acetate mixture, and the bottom left corner demonstrates the same capsules that were swollen with toluene and collapsed afterwards.

### Example 10:

When SMA14 of 224,000 Da was used at concentration of 5-6% in xylene, and the aqueous phase was water containing 1% PVA and TEPA there were obtained stable microcapsules with a relatively narrow size distribution (20-60 µm). When the concentration of SMA14 in xylene was 10% large microcapsules were obtained, with a broad size distribution. With concentration of 1% of SMA there were obtained weak and leaking microcapsules.

### Example 11:

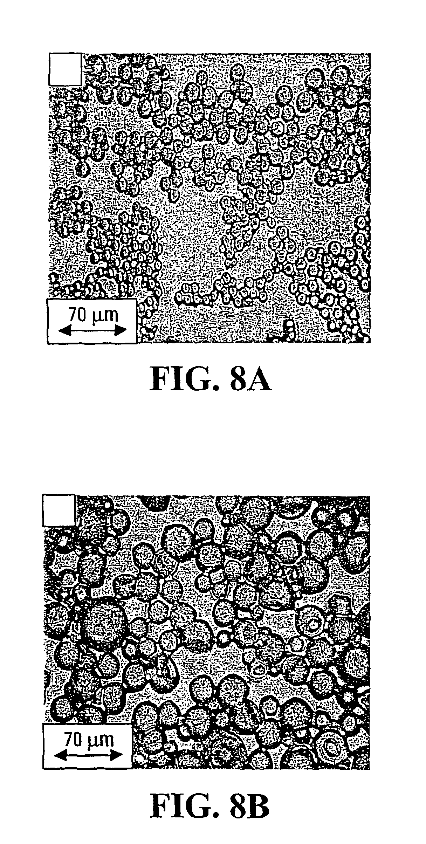

Encapsulations were performed according to Example 8 using SMA14, TEPA as amine, an MIBK/dodecyl acetate mixture as solvent, and with PVA or sodium dodecyl sulphate (SDS) as surfactant. Capsules produced using SDS were small, approximately 20 µm in diameter, and with a narrow size distribution. PVA also worked well, but gave slightly larger capsules, with a slightly broader size distribution. Figures 8A and 8B show the capsules obtained with SDS and PVA respectively.

### Example 12:

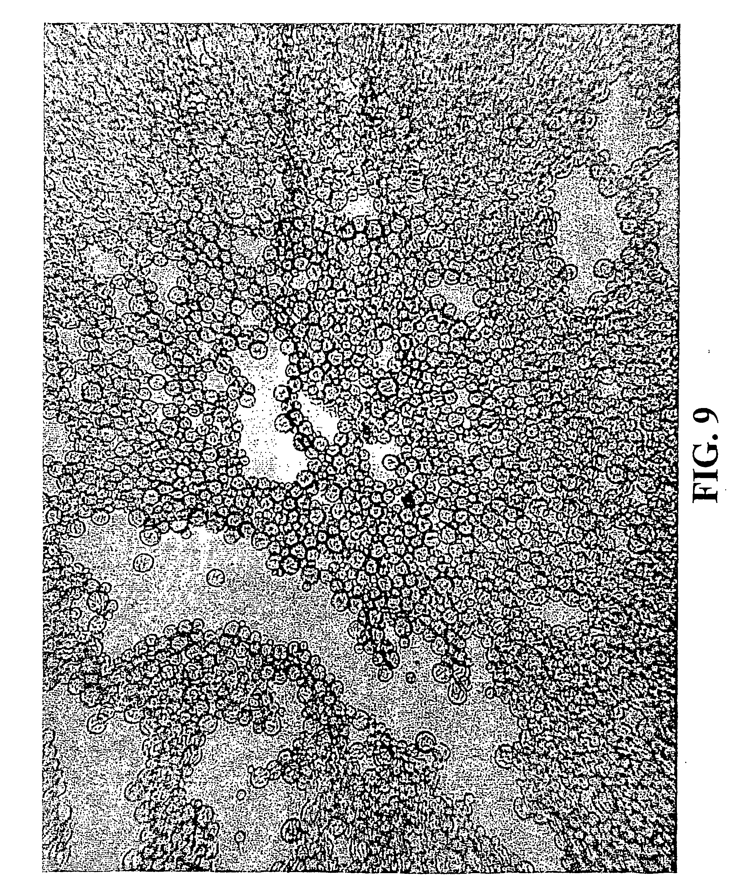

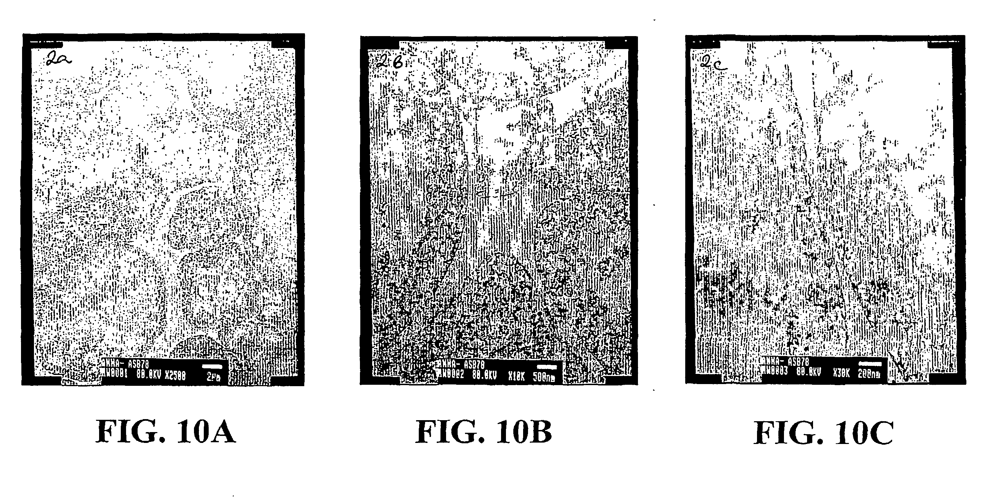

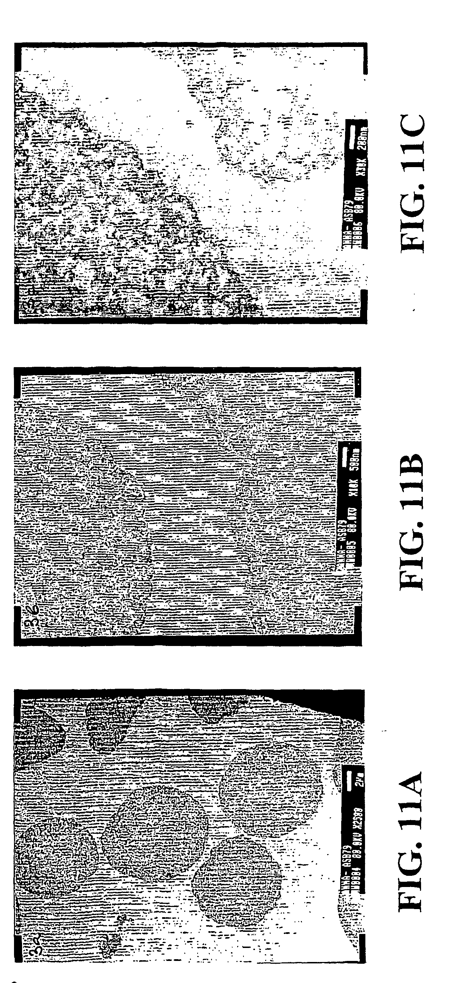

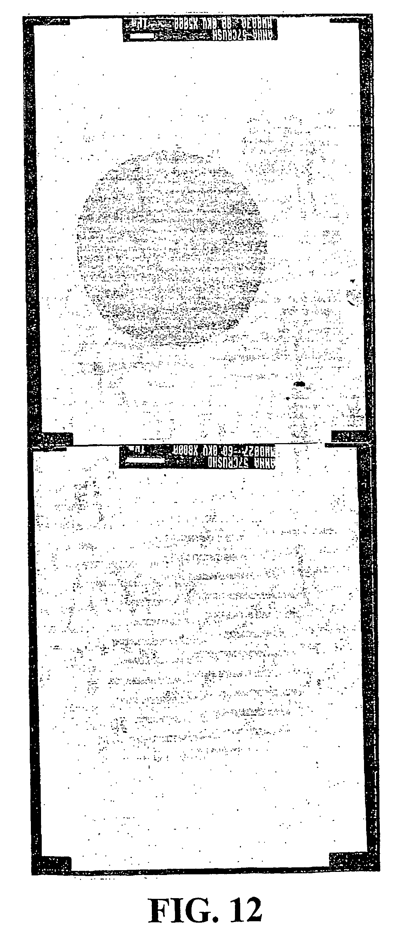

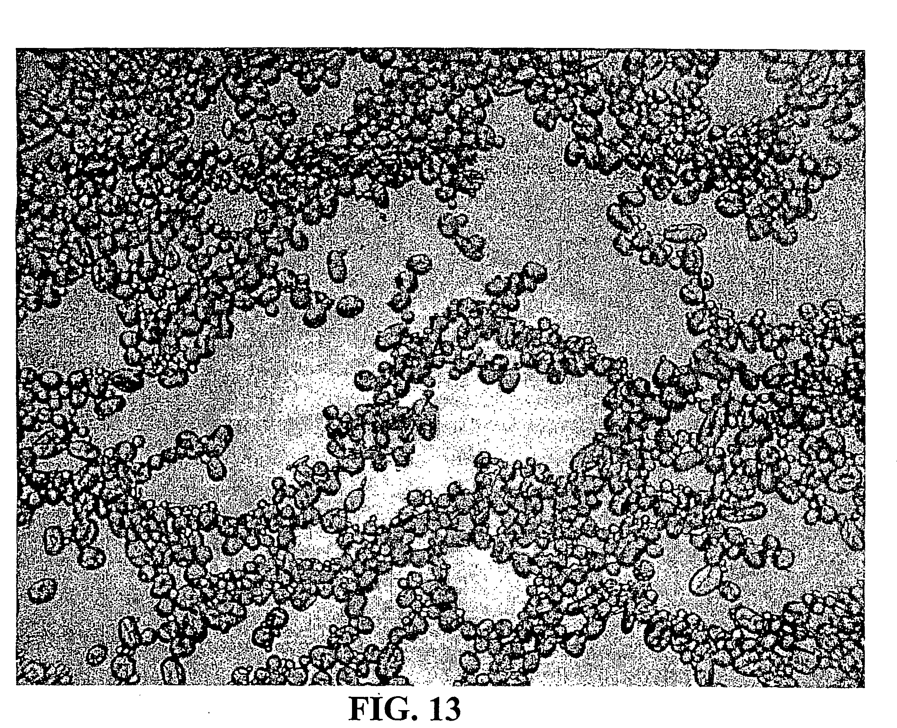

This example illustrates the formation of matrix-type hydrogel particles by a similar procedure to that of the previous examples, but using either higher polymer loading in the organic phase, or a different solvent composition.
A) Capsules: 0.5 g poly(styrene-maleic anhydride)(SMA32, 32% maleic anhydride groups, molecular weight 1700, Aldrich Chemicals) was dissolved in a mixture of ethylacetate (11 mL) and dodecylacetate (4 mL). The resulting solution was emulsified for 3 minutes in 30 mL dist. water containing 0.4 g IGEPAL 630 under stirring at 400 rpm, followed by addition of 0.2 g TEPA dissolved in 10 mL dist. water. All reagents were at room temperature. Capsules were formed within five minutes. Figure 9 shows an optical microscope image of a sample of dry capsules deposited on a glass slide. Figures 10A, B and C show TEM images at different magnifications.
B) Gel Particles: Using 1 g of the same polymer (SMA32) in the above procedure leads to core-filled, matrix type gel particles as shown in Figures 11A, B and C (TEM images).
C) Gel Particles: Using 3 g of the same polymer (SMA32) in the same procedure leads to denser gel particles. Figure 12 shows the TEM image, while Figure 13 shown an optical microscope image of these particles.

Both capsules and gel particles in Figures 9 through 13 are approximately 20 micrometers in diameter.

### Example 13:

The procedure described in Example 12B above was repeated with a change of the solvent composition to 6 mL ethyl acetate and 9 mL dodecyl acetate and led to formation of capsules.

### Example 14:

1 g of styrene-maleic anhydride copolymer (SMA32, 32% maleic anhydride groups, molecular weight 1700, from Aldrich Chemicals) was dissolved in ethyl acetate (10 mL). Separately, dodecanol (3 mL) was dissolved in ethyl acetate (5 mL). The two solutions were mixed together and emulsified for 30 seconds in distilled water (30 mL) containing IGEPAL 630 (0.4 g) under stirring at 400 rpm, followed by addition of TEPA (1 g) dissolved in distilled water. All reagents were at room temperature. Capsules were formed within five minutes.

### Example 15:

0.5g of tert.-butylstyrene-maleic anhydride copolymer (t-SMA50, 50% maleic anhydride groups, molecular weight 44,000) was dissolved in ethyl acetate (6 mL). Separately, dodecanol (4 mL) was dissolved in ethyl acetate (5 mL). The two solutions were mixed together and emulsified for 30 seconds in distilled water (30 mL) containing IGEPAL 630 (0.4 g), followed by addition of TEPA (1 g) dissolved in distilled water (10 mL). All reagents were at room temperature. Capsules were formed within five minutes. Dry capsules had a size of about 60.

### Example 16:

0.5 g tert.-butylstyrene-maleic anhydride copolymer (t-SMA50, 50% maleic anhydride groups, molecular weight 44,000) was dissolved in a mixture of ethyl acetate (11 mL) and dodecyl acetate (4 mL). The resulting solution was emulsified for 30 seconds in distilled water (30 mL) containing IGEPAL 630 (0.4 g) under stirring at 400rpm, follwed by addition of TEPA (1 g) dissolved in distilled water (10 mL). All reagents were at room temperature. Capsules were formed within five minutes. Dry capsules had a size of approximately 15 microns.

### Example 17:

0.5 g of the same t-SMA used in Example 16 was dissolved in a mixture of propyl acetate (11 mL) and dodecyl acetate (4 mL). The resulting solution was emulsified for 30 seconds in distilled water (30 mL) containing IGEPAL 630 (0.4 g) under stirring at 400 rpm, followed by addition of TEPA (1 g) dissolved in distilled water (10 mL). All reagents were at room temperature. Capsules were formed within five minutes. Dry capsules had a size of approximately 15 microns.

### Example 18:

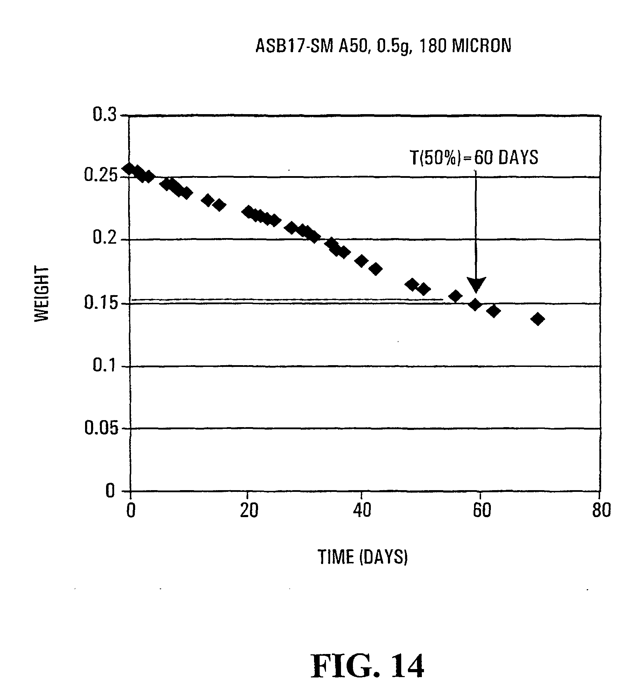

Release measurements were made on microcapsules made from SMA50 of about 180 µm diameter, containing dodecylacetate. Figure 14 is a graph of weight loss against time. An initial amount of 0.5 g of capsules was taken and weighed daily. At the end of the period of the experiment the capsules were heated to ensure release of all releasable material. The residue was weighed and taken to be the actual weight of the capsules. This weight was subtracted from the weights measured, and those weights, which were the weight of releasable material, were plotted against time in days. It can be seen from Figure 14 that the release was approximately linear and the time until half the material had been released was 60 days. This release profile is suitable for pheromone-based insect mating control.

### Example 19:

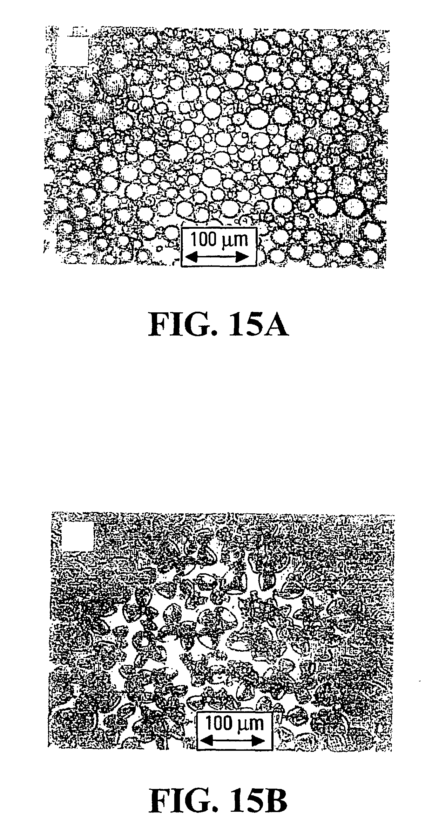

1 g of a copolymer of tert.-butylstyrene and maleic anhydride of 50% maleic anhydride content (BuSMA50, molecular weight 25,000) was dissolved in a mixture of hexyl acetate (11 ml) and dodecanol (4 ml). The resulting solution was emulsified for 15 min in 45 ml of distilled water containing 0.2 g IGEPAL under stirring at 400 rpm, followed by addition of 20 ml NaOH (0.1 N) solution at the rate of 0.002 mL per second. All reagents were at room temperature. Microcapsules were formed. Figure 15 shows optical microscope images of wet (a) and dry (b) (30 min on a slide) capsules.

### Example 20:

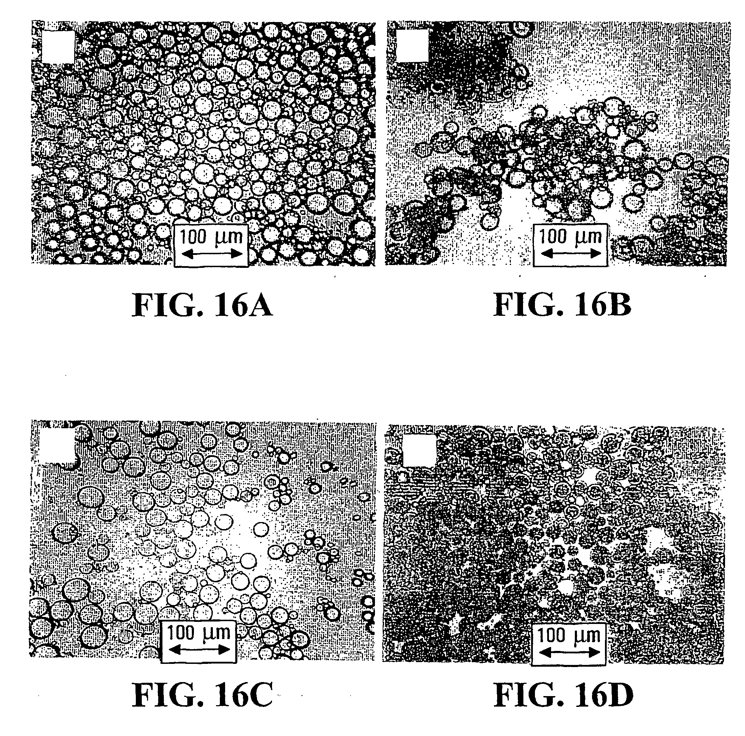

An aqueous suspension of the capsules formed in Example 19 was added dropwise to an excess of 10 wt% aqueous solution of polyethyleneimine (PEI, molecular weight 1,200, purchased from Aldrich), followed by addition of HCl (0.1 N) solution until the pH was 3.7. Figure 16 shows optical microscope images of the original wet capsules at pH 10(a); the original wet capsules at pH 3.7(b); capsules plus PEI at pH 10 (wet) (c); and capsules + PEI at pH 3.7 (wet) (d).

## Claims

1. A method of forming microcapsules or particles of a matrix which comprises dispersing a first liquid in a second, immiscible or partially miscible liquid that forms a continuous phase, one liquid containing a reactant that comprises anhydride moieties and the other liquid containing a reactant that will react with anhydride moieties to form a membrane.

2. A method according to claim 1, wherein the reactant that will react with the anhydride moieties is a polyamine or a polyol.

3. A method according to claim 1, wherein the reactant that will react with the anhydride moieties is a compound that contains amino groups and hydroxy groups.

4. A method according to claim 1, 2 or 3, wherein the reactant that comprises anhydride moieties is a copolymer of an unsaturated polymerisable anhydride and an unsaturated copolymerisable monomer.

5. A method according to claim 4, wherein the unsaturated polymerisable anhydride is maleic anhydride and the unsaturated copolymerisable monomer is styrene.

6. A method according to claim 2, wherein the polyamine is a compound of formula (I)
H₂N(CH₂)ₙNH₂ (I)
wherein n is an integer from 2 to 10, preferably 2 to 6, or a compound of formula (II) 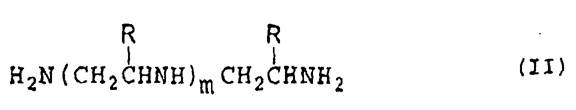 wherein m is an integer from 1 to 1000, preferably 1 to 10, and R is hydrogen or a methyl or ethyl group,
a primary/secondary/tertiary amine in which a hydrogen atom attached to one or more internal nitrogen atoms of a compound of formula (II) is replaced by a lower aminoalkyl group,
or a polyetheramine of general formula (III) 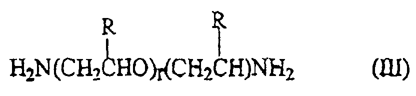 where r is an integer from 1 to 20.

7. A method according to claim 2, wherein the polyamine is tetraethylenepentamine.

8. A method according to claim 2, wherein the polyol is a compound of formula (IV)
HO(CH₂)ₙOH (IV)
where n is an integer from 2 to 10, preferably 2 to 4, or a compound of formula (V) 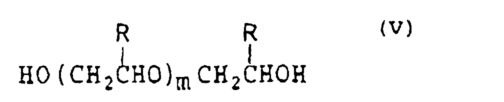 where m is an integer from 1 to 10 and R is hydrogen or a methyl or ethyl group.

9. A method according to any one of claims 1 to 8, wherein the first liquid is a water-immiscible or partially water-miscible liquid and the second liquid is an aqueous liquid.

10. A method according to claim 9, wherein the second liquid contains an emulsifier or surfactant.

11. A method according to claims 9 or 10, wherein there is present in the second liquid a tertiary amine as catalyst.

12. A method according to any one of claims 1, 4, 5, 9, 10 and 11, wherein the reactant that will react with anhydride moieties to form a membrane is a base that hydrolyses anhydride moieties and causes precipitation to form a membrane.

13. A method according to claim 12, wherein the reactant that comprises anhydride moieties is a copolymer of tert.-butylstyrene and maleic anhydride and the reactant that will react with anhydride moieties is sodium hydroxide followed, optionally by the further step of depositing polyethyleneimine on formed microcapsules.

14. A method according to any one of claims 1 to 13, wherein there is present in the first liquid a material to be encapsulated, preferably an alcohol and more preferably a C₁₄ or C₁₆ alcohol.

15. A method according to claim 14, wherein the material to be encapsulated is a semiochemical, preferably a pheromone, more preferably codling moth pheromone.

16. Microcapsules or particles of a matrix, formed by reaction, at an interface, between a reactant containing anhydride moieties and a reactant that will react with anhydride moieties to form a membrane.

17. Microcapsules or particles according to claim 16, wherein the membrane is formed by reaction between anhydride moieties, present in a styrene-anhydride copolymer, and a polyamine.

18. Microcapsules or particles according to claim 17, wherein the styrene-anhydride copolymer is a styrene-maleic anhydride copolymer.

19. Microcapsules or particles according to claim 16, 17 or 18, containing a material that undergoes controlled release from the microcapsule, preferably a semiochemical and more preferably a pheromone.

20. A method of controlling insect population or behaviour which comprises applying to the habitat of the insects microcapsules or particles defined in claim 19.

## Patentansprüche

1. Verfahren zur Herstellung von Mikrokapseln oder Teilchen einer Matrix, umfassend das Dispergieren einer ersten Flüssigkeit in einer zweiten, damit nicht mischbaren oder teilweise mischbaren Flüssigkeit, die eine kontinuierliche Phase bildet, wobei eine Flüssigkeit einen Reaktanten enthält, der Anhydridgruppierungen umfasst, und die andere Flüssigkeit einen Reaktanten enthält, der mit Anhydridgruppierungen reagiert, um eine Membran zu bilden.

2. Verfahren nach Anspruch 1, worin der Reaktant, der mit den Anhydridgruppierungen reagiert, ein Polyamin oder ein Polyol ist.

3. Verfahren nach Anspruch 1, worin der Reaktant, der mit den Anhydridgruppierungen reagiert, eine Verbindung ist, die Aminogruppen und Hydroxygruppen enthält.

4. Verfahren nach Anspruch 1, 2 oder 3, worin der Reaktant, der Anhydridgruppierungen enthält, ein Copolymer aus einem ungesättigten polymerisierbaren Anhydrid und einem ungesättigten copolymerisierbaren Monomer ist.

5. Verfahren nach Anspruch 4, worin das ungesättigte polymerisierbare Anhydrid Maleinsäureanhydrid ist und das ungesättigte copolymerisierbare Monomer Styrol ist.

6. Verfahren nach Anspruch 2, worin das Polyamin eine Verbindung der Formel (I)
H₂N(CH₂)ₙNH₂ (I)
worin n eine ganze Zahl von 2 bis 10, vorzugsweise 2 bis 6, ist, oder eine Verbindung der Formel (II) 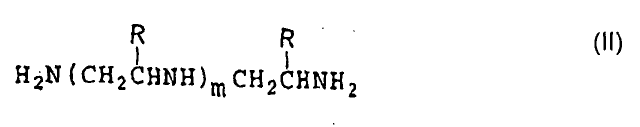 worin m eine ganze Zahl von 1 bis 1.000, vorzugsweise 1 bis 10, ist und R Wasserstoff oder eine Methyl- oder Ethylgruppe ist,
ein primäres/sekundäres/tertiäres Amin, worin ein Wasserstoffatom, das an ein oder mehrere interne Stickstoffatome einer Verbindung der Formel (II) gebunden ist, durch eine Niederaminoalkylgruppe ersetzt ist,
oder ein Polyetheramin der allgemeinen Formel (III) 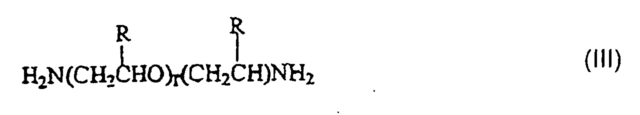 worin r eine ganze Zahl von 1 bis 20 ist, ist.

7. Verfahren nach Anspruch 2, worin das Polyamin Tetraethylenpentamin ist.

8. Verfahren nach Anspruch 2, worin das Polyol eine Verbindung der Formel (IV)
HO(CH₂)ₙOH (IV)
worin n eine ganze Zahl von 2 bis 10, vorzugsweise 2 bis 4, ist, oder eine Verbindung der Formel (V) ist 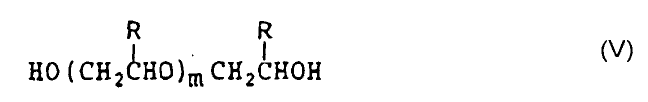 worin m eine ganze Zahl von 1 bis 10 ist und R Wasserstoff oder eine Methyl- oder Ethylgruppe ist.

9. Verfahren nach einem der Ansprüche 1 bis 8, worin die erste Flüssigkeit eine mit Wasser nicht mischbare oder teilweise mischbare Flüssigkeit und die zweite Flüssigkeit eine wässrige Flüssigkeit ist.

10. Verfahren nach Anspruch 9, worin die zweite Flüssigkeit einen Emulgator oder ein Tensid enthält.

11. Verfahren nach Anspruch 9 oder 10, worin in der zweiten Flüssigkeit ein tertiäres Amin als Katalysator enthalten ist.

12. Verfahren nach einem der Ansprüche 1, 4, 5, 9, 10 und 11, worin der Reaktant, der mit Anhydridgruppierungen reagiert, um eine Membran zu bilden, eine Base ist, die Anhydridgruppierungen hydrolysiert und eine Fällung verursacht, um eine Membran zu bilden.

13. Verfahren nach Anspruch 12, worin der Reaktant, der Anhydridgruppierungen umfasst, ein Copolymer aus tert-Butylstyrol und Maleinsäureanhydrid ist und der Reaktant, der mit Anhydridgruppierungen reagiert, Natriumhydroxid ist, wonach gegebenenfalls ein weiterer Schritt des Abscheidens von Polyethylenimin auf gebildeten Mikrokapseln folgt.

14. Verfahren nach einem der Ansprüche 1 bis 13, worin in der ersten Flüssigkeit ein Material vorhanden ist, das eingekapselt werden soll, vorzugsweise ein Alkohol und noch bevorzugter ein C₁₄- oder C₁₆-Alkohol.

15. Verfahren nach Anspruch 14, worin das einzukapselnde Material ein Geruchsstoff, vorzugsweise ein Pheromon, noch bevorzugter ein Apfelwickler-Pheromon ist.

16. Mikrokapseln oder Teilchen einer Matrix, die durch Reaktion zwischen einem Reaktanten, der Anhydridgruppierungen umfasst, und einem Reaktanten, der mit Anhydridgruppierungen reagiert, um eine Membran zu bilden, an einer Grenzfläche gebildet werden.

17. Mikrokapseln oder Teilchen nach Anspruch 16, worin die Membran durch Umsetzung zwischen Anhydridgruppierungen, die in einem Styrol-Anhydrid-Copolymer vorhanden sind, und einem Polyamin gebildet wird.

18. Mikrokapseln oder Teilchen nach Anspruch 17, worin das Styrol-Anhydrid-Copolymer ein Styrol-Maleinsäureanhydrid-Copolymer ist.

19. Mikrokapseln oder Teilchen nach Anspruch 16, 17 oder 18, die ein Material enthalten, das eine kontrollierte Abgabe von der Mikrokapsel durchläuft, vorzugsweise einen Geruchsstoff und noch bevorzugter ein Pheromon.

20. Verfahren zur Kontrolle einer Insektenpopulation oder ihres Verhaltens, umfassend das Ausbringen von Mikrokapseln oder Teilchen nach Anspruch 19 in den Lebensraum der Insekten.

## Revendications

1. Méthode de formation de microcapsules ou de particules à base d'une matrice qui consiste à disperser un premier liquide dans un second liquide non miscible ou partiellement miscible qui forme une phase continue, un liquide contenant un r éactif qui comprend des fractions anhydride et l'autre liquide contenant un réactif qui réagira avec les fractions anhydride pour former une membrane.

2. Méthode selon la revendication 1, dans laquelle le réactif qui réagira avec les fractions anhydride est une polyamine ou un polyol.

3. Méthode selon la revendication 1, dans laquelle le réactif qui réagira avec les fractions anhydride est un composé qui contient des groupes amino et des groupes hydroxy.

4. Méthode selon la revendication 1, 2 ou 3, dans laquelle le réactif qui comprend des fractions anhydride est un copolymère d'un anhydride polymérisable insaturé et d'un monomère copolymérisable insaturé.

5. Méthode selon la revendication 4, dans laquelle l'anhydride polymérisable insaturé est l'anhydride maléique et le monomère copolymérisable insaturé est le styrène.

6. Méthode selon la revendication 2, dans laquelle la polyamine est un composé de formule (I)
H₂N(CH₂)ₙNH₂ (I)
dans laquelle n est un nombre entier de 2 à 10, de préférence, de 2 à 6, ou un composé de formule (II) 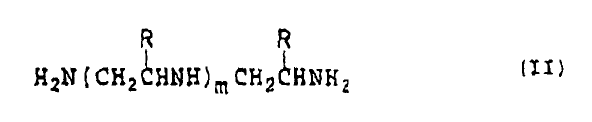 dans laquelle m est un nombre entier de 1 à 1000, de préférence, de 1 à 10, et R est un atome d'hydrogène ou un groupe méthyle ou éthyle,
une amine primaire/secondaire/tertiaire dans laquelle un atome d'hydrogène attaché à un ou plusieurs atomes d'azote internes d'un composé de formule (II) est remplacé par un groupe aminoalkyle inférieur,
ou une polyétheramine de formule générale (III) 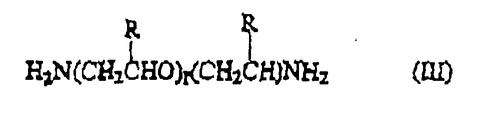 dans laquelle r est un nombre entier de 1 à 20.

7. Méthode selon la revendication 2, dans laquelle la polyamine est une tétraéthylènepentamine.

8. Méthode selon la revendication 2, dans laquelle le polyol est un composé de formule (IV)
HO(CH₂)ₙOH (IV)
dans laquelle n est un nombre entier de 2 à 10, de préférence, de 2 à 4, ou un composé de formule (V) 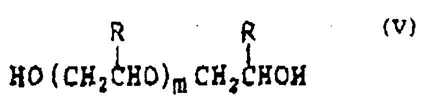 dans laquelle m est un nombre entier de 1 à 10 et R est un atome d'hydrogène ou un groupe méthyle ou éthyle.

9. Méthode selon l'une quelconque des revendications 1 à 8, dans laquelle le premier liquide est un liquide non miscible à l'eau ou partiellement miscible à l'eau et le second liquide est un liquide aqueux.

10. Méthode selon la revendication 9, dans laquelle le second liquide contient un émulsifiant ou un tensioactif.

11. Méthode selon les revendications 9 ou 10, dans laquelle une amine tertiaire est présente dans le second liquide à titre de catalyseur.

12. Méthode selon l'une quelconque des revendications 1, 4, 5, 9, 10 et 11, dans laquelle le réactif qui réagira avec les fractions anhydride pour former une membrane est une base qui hydrolyse les fractions anhydride et provoque une précipitation pour former une membrane.

13. Méthode selon la revendication 12, dans laquelle le réactif qui comprend des fractions anhydride est un copolymère de tert-butylstyrène et d'anhydride maléique et le réactif qui réagira avec les fractions anhydride est l'hydroxyde de sodium suivie, éventuellement, de l'étape supplémentaire consistant à déposer un polyéthylèneimine sur les microcapsules formées.

14. Méthode selon l'une quelconque des revendications 1 à 13, dans laquelle un matériau qui doit être encapsulé, de préférence, un alcool et mieux encore un alcool C₁₄ ou C₁₆ est présent dans le premier liquide.

15. Méthode selon la revendication 14, dans laquelle le matériau qui doit être encapsulé est un agent semi-chimique, de préférence, une phéromone, mieux encore, une phéromone de carpocapse.

16. Microcapsules ou particules à base d'une matrice formée par réaction, au niveau d'une interface, entre un réactif contenant des fractions anhydride et un réactif qui réagira avec les fractions anhydride pour former une membrane.

17. Microcapsules ou particules selon la revendication 16, dans lesquelles la membrane est formée par réaction entre des fractions anhydride, présentes dans un copolymère de styrène-anhydride, et une polyamine.

18. Microcapsules ou particules selon la revendication 17, dans lesquelles le copolymère de styrène-anhydride est un copolymère de styrène-anhydride maléique.

19. Microcapsules ou particules selon la reven dication 16, 17 ou 18, contenant un matériau qui subit une libération contrôlée à partir de la microcapsule, de préférence, un agent semi-chimique et mieux encore, une phéromone.

20. Méthode de lutte contre une population ou un comportement d'insectes qui consiste à appliquer à l'habitat des insectes les microcapsules ou les particules définies dans la revendication 19.
